# EUROPÄISCHE PATENTSCHRIFT

(11) **EP 1 935 698 B1**
(45) Veröffentlichungstag und Bekanntmachung des Hinweises auf die Patenterteilung: **10.03.2010**
(21) Anmeldenummer: 07022158.5
(22) Anmeldetag: 15.11.2007
(51) Int. Cl.: B60K 7/00

(54) **Antriebseinheit mit Fahr- und Lenkmotor für ein Antriebsrad eines Flurförderzeugs**
Drive unit with propulsion and steering motor for the drive wheel of an industrial truck
Unité d'entraînement pour moteur de translation et de guidage d'une roue d'entraînement d'un chariot de manutention

(30) Priorität: 21.12.2006 DE 102006060618
(43) Veröffentlichungstag der Anmeldung: 25.06.2008
(73) Patentinhaber: Jungheinrich Aktiengesellschaft, 22047 Hamburg (DE)
(72) Erfinder: Schipper, Ulf, Dipl.-Ing., 24558 Henstedt-Ulzburg (DE)
(74) Vertreter: Graalfs, Edo

(56) Entgegenhaltungen:
- DE-A1-102004 005 869
- DE-A1-102004 006 722
- DE-A1-102004 023 341
- DE-A1-102004 037 079
- US-B1- 6 491 127

## Beschreibung

Die Erfindung bezieht sich auf eine Antriebseinheit mit einem Fahr- und einem Lenkmotor für ein Antriebsrad eines Flurförderzeugs nach dem Oberbegriff des Patentanspruchs 1.

Eine derartige Antriebseinheit ist zum Beispiel aus DE 10 2004 005 869 A1 bekannt geworden. Ein Antriebsflansch für den Fahrmotor bildet zusammen mit einem parallel zum Fahrmotor angeordneten Lenkmotor eine Baueinheit. Aus DE 10 2004 001 701 A1 ist eine ähnliche Antriebseinheit bekannt geworden, bei der der Deckel für das Gehäuse des Fahrmotors eine Lagerbuchse aufnimmt für einen Lenkmotor, der über ein Untersetzungsgetriebe mit dem Drehschemel in Wirkverbindung ist, an den das Antriebsrad um eine horizontale Achse gelagert ist.

Aus DE 103 28 651 A1 oder auch DE 10 2004 023 341 ist bekannt geworden, Fahrmotor und Lenkmotor koaxial anzuordnen und das Untersetzungsgetriebe des Lenkmotors im gemeinsamen Gehäuse der Motoren anzuordnen. Das Getriebe für den Fahrmotor ist üblicherweise in allen Fällen ein Winkelgetriebe, das von der Welle des Fahrmotors angetrieben und in einem vertikalen Schenkel des Drehschemels untergebracht ist.

Dokument US-649 1 127-B1 beschreibt eine Antriebseinheit mit allen Merkmalen des Oberbegriffs des Anspruchs 1.

Der Erfindung liegt die Aufgabe zugrunde, eine Antriebseinheit mit einem Fahr- und Lenkmotor für ein Flurförderzeug dahingehend zu verbessern, daß der Aufwand für Herstellung und Montage verringert werden soll. Außerdem soll eine räumlich günstige Ausnutzung erzielt werden.

Diese Aufgabe wird durch die Merkmale des Patentanspruchs 1 gelöst.

Bei der Erfindung nach Patentanspruch 1 ist das Gehäuse von Fahr- und Lenkmotor einteilig geformt. Fahrmotor- und Lenkantrieb werden in entsprechenden Aufnahmeteilen des gemeinsamen Gehäuses untergebracht.

Auf diese Weise wird der Aufwand für die Herstellung der Gehäuseanordnung und die Montage der einzelnen Teile der Antriebseinheit reduziert. Außerdem kann bei einer derartigen Anordnung das Gehäuse sehr klein bauen. In einer Ausgestaltung der Erfindung ist vorgesehen, daß das einteilige Gehäuse mit einem seitlichen Ansatz geformt ist, der als gemeinsamer Klemmkasten für die Motoren ausgebildet ist. Alternativ kann an einer angeformten Grundplatte ein gemeinsamer Klemmkasten für die Motoren angebracht werden. Auch hierdurch wird die Anordnung räumlich maximal reduziert. In den gemeinsamen Klemmkasten können auch alle Komponenten für die Steuervorrichtungen für beide Motoren untergebracht sein. Der Klemmkasten ist in dem stumpfen Winkel zwischen den beiden Gehäuseteilen angeordnet, wodurch die Außenabmessungen der Einheit nur wenig vergrößert werden.

Üblicherweise ist zum Schwenken des Drehschemels mit Hilfe des Lenkmotors ein Untersetzungsgetriebe vorzusehen. Eine Ausgestaltung der Erfindung sieht hierzu vor, daß im Gehäuseteil für den Lenkmotor ein Untersetzungsgetriebe angeordnet ist. Dieses wirkt vorzugsweise mit einer Innen- oder Außenverzahnung des Drehschemels zusammen.

Ausführungsbeispiele der Erfindung werden nachfolgend anhand von Zeichnungen näher erläutert.
- Fig. 1: zeigt perspektivisch ein gemeinsames Gehäuse für Fahr- und Lenkmotor eines Antriebs für ein Rad eines Flurförderzeugs.
- Fig. 2: zeigt eine ähnliche Darstellung wie Fig. 1, jedoch zusätzlich mit einem Klemmkasten.
- Fig. 3: zeigt die Untersicht auf die Anordnung nach Fig. 2.
- Fig. 4: zeigt einen Schnitt durch eine Antriebseinheit mit Fahr- und Lenkmotor.

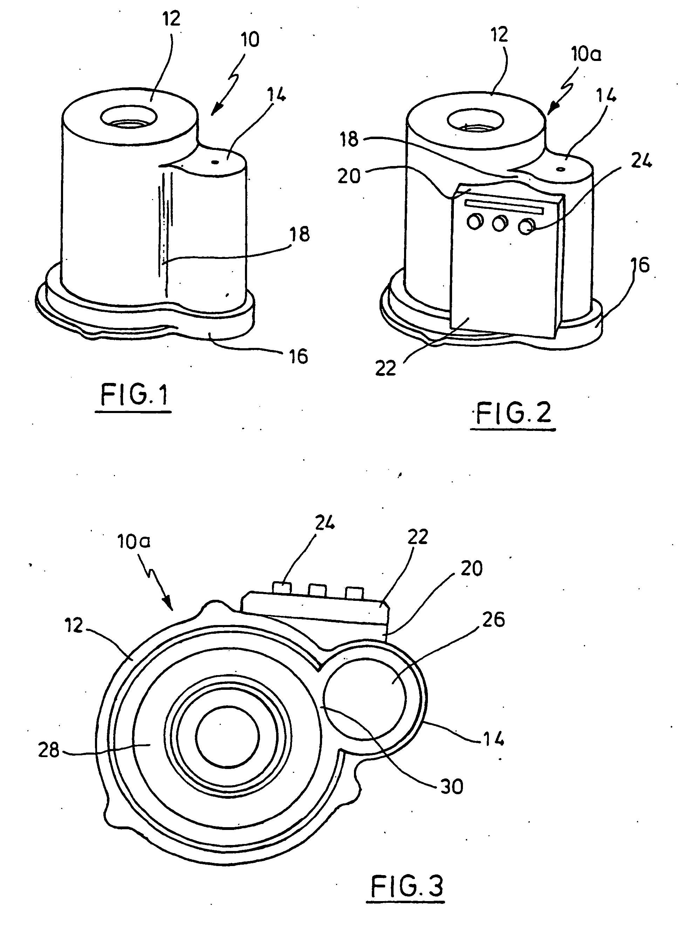

In Fig. 1 ist ein einteiliges Gehäuse 10 gezeigt, das zum Beispiel aus Aluminiumdruckguß hergestellt ist. Es weist einen im wesentlichen zylindrischen Gehäuseteil 12 auf zur Aufnahme eines Fahrmotors für ein Antriebsrad eines Flurförderzeugs. Exzentrisch zum im wesentlichen zylindrischen Gehäuseteil 12 ist ein weiteres im wesentlichen zylindrisches Gehäuseteil 14 angeformt, das zur Aufnahme eines Lenkantriebs für das angetriebene Rad ausgebildet ist. Lenk- und Fahrmotor und zugeordnete Getriebe, die im einteiligen Gehäuse 10 untergebracht sind, sind nicht dargestellt. An der Unterseite des einteiligen Gehäuses 10 ist ein Flansch 16 angeformt zur Befestigung an einem rahmenfesten Bauteil des nicht dargestellten Flurförderzeugs.

Die Ausführungsform nach Fig. 2 gleicht den Teilen der nach Fig. 1, so daß insoweit gleiche Bezugszeichen verwendet sind. Die Besonderheit gegenüber der Darstellung nach Fig. 1 besteht darin, daß im Übergangsbereich 18 zwischen den Gehäuseteilen 12 (stumpfer Winkel), 14 ein Ansatz 20 angeformt ist, der eine nach außen weisende Rechteckfläche besitzt. An dieser ist ein Klemmkasten 22 angebracht. Die Anbringung ist im einzelnen nicht dargestellt. In dem Klemmkasten sind die Anschlüsse für die beiden Motoren untergebracht. Beispielhaft sind elektrische Anschlüsse 24 skizziert, die Anbringung eines Deckels ist im einzelnen nicht dargestellt. Bei entsprechender Ausgestaltung kann auch die Steuerung für beide Elektromotoren in den Klemmkasten integriert werden.

Fig. 3 zeigt die Unterseite der Darstellung nach Fig. 2. Man erkennt bei 26 einen Lenkantrieb im Gehäuseteil 14 und bei 28 einen Fahrmotor. Wie weiterhin erkannt werden kann, sind die zylindrischen Räume der Gehäuseteile 12, 14 des einteiligen Gehäuses 10a voneinander vollständig getrennt, wie durch die Zwischenwand 30 angedeutet ist.

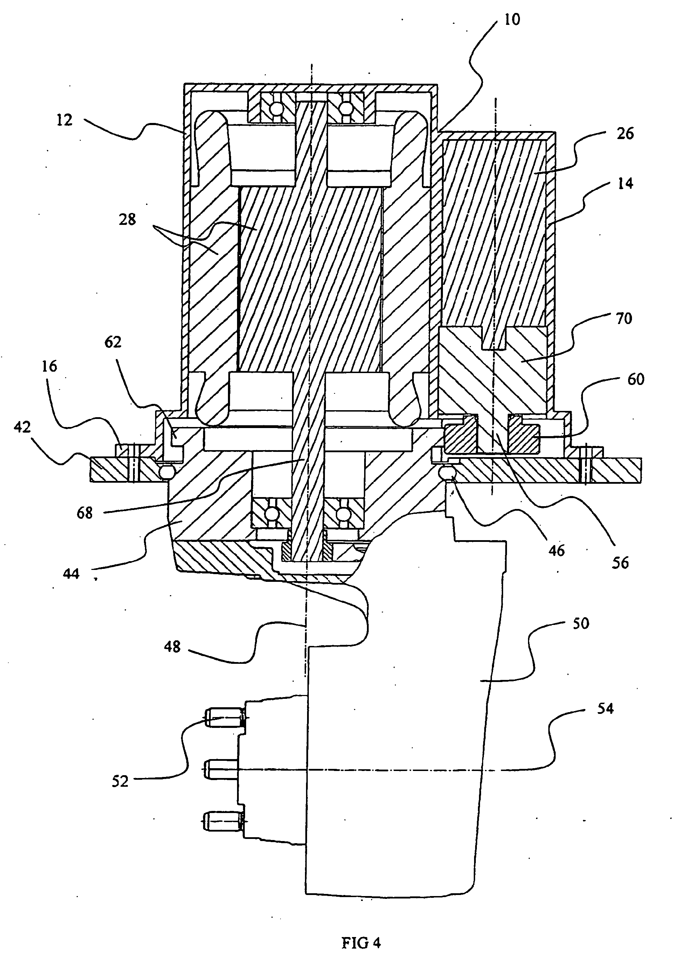

In Fig. 4 ist eine vollständige Antriebseinheit 40 für ein nicht gezeigtes Rad eines nicht gezeigten Flurförderzeugs dargestellt. Vom Flurförderzeug dargestellt ist lediglich ein rahmenfester Abschnitt 42. Man erkennt, daß ein gemeinsames Gehäuse 10, wie es in Fig. 1 dargestellt ist, Fahrmotor 28 und Lenkmotor 26 und ein Lenkgetriebe aufnimmt und durch Verschraubung am rahmenfesten Abschnitt 42 befestigt ist.

Ein Drehschemel 44, welcher mit einer Schraubverbindung mit dem Getriebeteil 56 verbunden ist, an ein nicht gezeigtes angetriebenes und gelenktes Rad angebracht ist, wie durch die Schrauben 52, kann um eine vertikale Achse 48 mittels eines Lagers 46 geschwenkt werden. Das nicht gezeigte Rad dreht sich um eine horizontale Achse 54.

Ein auf einer Antriebswelle 56 des Lenkantriebs 26, 70 sitzendes Ritzel 60 kämmt mit der Außenverzahnung eines Zahnrades 62, welches einteilig mit dem Drehschemel 44 oder verschraubt mit diesem ausgeführt ist.

Wie erkennbar, befindet sich die beschriebene Stirnradgetriebeanordnung im gemeinsamen Gehäuse 10. Eine Welle 68 des Fahrmotors 28 treibt über ein nicht weiter beschriebenes Winkelgetriebe in der Getriebeanordnung 50 das nicht gezeigte Antriebsrad. Ein derartiger Antrieb ist allgemein bekannt.

## Patentansprüche

1. Antriebseinheit mit einem Fahr- und einem Lenkmotor für ein Antriebsrad eines Flurförderzeugs, das in einem Drehschemel gelagert ist, der in einem Rahmen des Flurförderzeugs um eine vertikale Achse schwenkbar gelagert ist, wobei die Antriebswelle des Fahrmotors über ein erstes Getriebe auf das Antriebsrad wirkt und der parallel zum Fahrmotor angeordnete Lenkmotor über ein zweites Getriebe den Drehschemel antreibt, **dadurch gekennzeichnet, daß** ein gemeinsames Gehäuse (12, 14) für Fahr- und Lenkmotor einteilig geformt ist.

2. Antriebseinheit nach Anspruch 1, **dadurch gekennzeichnet, daß** das einteilige Gehäuse (10, 10a) im Aluminiumguß geformt ist.

3. Antriebseinheit nach Anspruch 1 oder 2, **dadurch gekennzeichnet, daß** das einteilige Gehäuse (10a) mit einem seitlichen Ansatz (20) geformt ist, der als gemeinsamer Klemmkasten für die Motoren (26, 28) ausgebildet oder an dem ein gemeinsamer Klemmkasten für Fahr- und Lenkmotor (28, 26) angebracht ist.

4. Antriebseinheit nach einem der Ansprüche 1 bis 3, **dadurch gekennzeichnet, daß** ein Untersetzungsgetriebe im Gehäuseteil (14) für den Lenkmotor (26) angeordnet ist.

5. Antriebseinheit nach einem der Ansprüche 1 bis 4, **dadurch gekennzeichnet, daß** im Gehäuseteil (14) für den Lenkantrieb (26, 70) ein Winkelsensor angeordnet ist.

6. Antriebseinheit nach einem der Ansprüche 3 bis 5, **dadurch gekennzeichnet, daß** die Steuervorrichtungen im gemeinsamen Klemmkasten (20) angeordnet sind.

7. Antriebseinheit nach einem der Ansprüche 1 bis 6, **dadurch gekennzeichnet, daß** der Drehschemel (44) eine ringförmige Verzahnung (62) aufweist, die mit der Antriebswelle des Lenkgetriebes in Eingriff ist.

## Claims

1. Drive unit with propulsion and steering motor for a drive wheel of an industrial truck, which is mounted in a center pivot plate, which is swivel mounted in a frame of the industrial truck around a vertical axis, wherein the drive shaft of the propulsion motor acts on the drive wheel via a first gearbox and the steering motor arranged parallel to the propulsion motor drives the center pivot plate via a second gearbox, **characterized in that** a joint housing (12, 14) for the propulsion and steering motor is designed as one piece.

2. Drive unit according to claim 1, **characterized in that** the one-piece housing (10, 10a) is formed in aluminum casting.

3. Drive unit according to claim 1 or 2, **characterized in that** the one-piece housing (10a) is formed with a lateral appendage (20), which is designed as a joint terminal box for the motors (26, 28) or to which is attached one joint terminal box for the propulsion and steering motor (28, 26).

4. Drive unit according to one of claims 1 through 3, **characterized in that** a reduction gear unit is arranged in the housing part (14) for the steering motor (26).

5. Drive unit according to one of claims 1 through 4, **characterized in that** an angle sensor is arranged in the housing part (14) for the steering drive (26, 70).

6. Drive unit according to one of claims 3 through 5, **characterized in that** the control devices are arranged in the joint terminal box (20).

7. Drive unit according to one of claims 1 through 6, **characterized in that** the center pivot plate (44) has a circular toothing (62), which engages with the drive shaft of the steering gear.

## Revendications

1. Unité d'entraînement avec un moteur de translation et de guidage pour une roue d'entraînement d'un chariot de manutention, qui est logée dans une traverse pivotante qui est logée de manière pivotante autour d'un axe vertical dans un châssis du chariot de manutention, dans laquelle l'arbre d'entraînement du moteur de translation agit par le biais d'un premier engrenage sur la roue d'entraînement et le moteur de guidage disposé parallèle au moteur de translation entraîne par le biais d'un second engrenage la traverse pivotante, **caractérisée en ce qu'**un carter commun (12, 14) pour le moteur de translation et le moteur de guidage est formé en une seule pièce.

2. Unité d'entraînement selon la revendication 1, **caractérisée en ce que** le carter en une seule pièce (10, 10a) est formé en fonte d'aluminium.

3. Unité d'entraînement selon la revendication 1 ou 2, **caractérisée en ce que** le carter en une seule pièce (10a) est formé avec un appendice latéral (20) qui est constitué en tant que boîte à bornes commune pour les moteurs (26, 28) ou auquel est appliqué une boîte à bornes commune pour le moteur de translation et le moteur de guidage (28, 26).

4. Unité d'entraînement selon l'une des revendications 1 à 3, **caractérisée en ce qu'**un engrenage réducteur est disposé dans la partie de carter (14) pour le moteur de guidage (26).

5. Unité d'entraînement selon l'une des revendications 1 à 4, **caractérisée en ce qu'**un capteur angulaire est disposé dans la partie de carter (14) pour l'entraînement de guidage (26, 70).

6. Unité d'entraînement selon l'une des revendications 3 à 5, **caractérisée en ce que** les dispositifs de commande sont disposés dans la boîte à bornes commune (20).

7. Unité d'entraînement selon l'une des revendications 1 à 6, **caractérisée en ce que** la traverse pivotante (44) présente une denture annulaire (62) qui est en prise avec l'arbre d'entraînement de l'engrenage de guidage.
